# EUROPEAN PATENT APPLICATION

(11) **EP 4 530 278 A1**
(43) Date of publication of application: **02.04.2025**
(21) Application number: 23200096.8
(22) Date of filing: 27.09.2023
(51) Int. Cl.: C05B 17/02, A01N 63/23, C05B 19/00, C05F 7/00, C05F 11/08, C05G 5/12

(54) **PROCESS OF TRANSFORMATION AND VALORIZATION OF SLUDGE PHOSPHATE USING MICROORGANISMS TO CREATE AN ENVIRONMENTALLY FRIENDLY GRANULE FERTILIZER**

(71) Applicant: Mathlouthi, Fakir, 60325 Francfort Hessen (DE)
(72) Inventor: MATHLOUTHI, FAKIR, 60325 FRANCFORT (DE); MATHLOUTHI, FAKIR, 60325 FRANCFORT (DE)

(57) **Abstract**

This patent focuses on creating an environmentally friendly granule fertilizer from a sludge phosphate resulting from washing phosphate during the mining process. This sludge is normally kept in stored basins, but mostly exceeding their allocated space, devast in the landscape resulting in a severe and potential source of pollution. (Reta et al., 2018). Our invention approach is to turn this sludge phosphate to a granule fertilizer based on a sequence of process combining mechanical granulation and microorganism treatment.

The first step considers extracting the sludge phosphate from the deposit basins and then reduce its size by mechanical grinding, this step will help to homogenize sludge phosphate in a uniform mineralogical size between 0,5mm-1mm, an important feature for further granulation of sludge phosphate.

The second step will be to treat the grinded sludge phosphate with two types of microorganisms in instance Azotobacter and Phosphors solubizing bacteria (Bacillus Thuringiensis). Both microorganisms are mixed with water inside a skid water system and sprayed on the grinded sludge phosphate.

The third step, work on pre-granulating the mixture composed of sludge phosphate with microorganisms inside rotary drum for given speed, this action will help creating the first agglomerated granular. This action will be followed by a fourth step that consist of granulating the mixture and shaping the spherical granular with several layers to increase its size.

Finally, the fifth step, called post granulation which is carried inside an innovative spin dry system, that consists of applying both centrifugal effect and hot air heated ventilation, for polishing the granular, increase his hardness and decrease humidity. The several advantages associated with the combinations of those 5 techniques, have been conducted in a prototype line of capacity 1 ton per hour and applied to sludge phosphate.

The Innovation is used for rapid production, with no adding of any chemical that have a negative impact on environment, of a granule fertilizer with good quality characteristics.

## Description

It is an industrial process which makes it possible to recover and convert into a granule fertilizer, the sludge of the discharges result of washing phosphate rock with water. From sludge phosphate to granule fertilizer, the following operations are carried out:
- Size reduction process of the sludge phosphate.
- Treatment of sludge Phosphate with microorganisms.
- Pre-Granulation of the mixture sludge phosphate and microorganisms.
- Granulation of the mixture sludge phosphate and microorganisms.
- Post Granulation of the mixture sludge phosphate and microorganisms.

This innovative process of granulation is considered as a combination of free chemical process and mechanical process. It results on a production of a granular fertilizer with two majors' components: nitrogen from nitrobacteria fixation, and phosphor.

The process of granulation has following main advantages:
- Innovation continuous process for sludge phosphate valorization.
- Treatment of sludge phosphate by microorganism in a continuous process which makes it possible to highlight an availability of nitrogen and phosphor nutrient in the granulated product adequate for agricultural.
- Innovative physical granulation of the mixture composed of sludge phosphate and microorganism providing good agglomeration and spherical shaped granular.
- Innovative dry process for post granulation using a unique system composed of a centrifugal spin dryer system supported by a combined hot air and fan device.

### Brief description of the drawings

To complement the description that is being made and to help a better understanding of the characteristics of the invention, a set of drawings is attached as an integral part of said description where, with an illustrative and non-limiting nature, it has been represented as follow:
Figure 1 shows a process overview of main steps of a plant granulation process of sludge phosphate enriched with microorganisms according to the present invention.

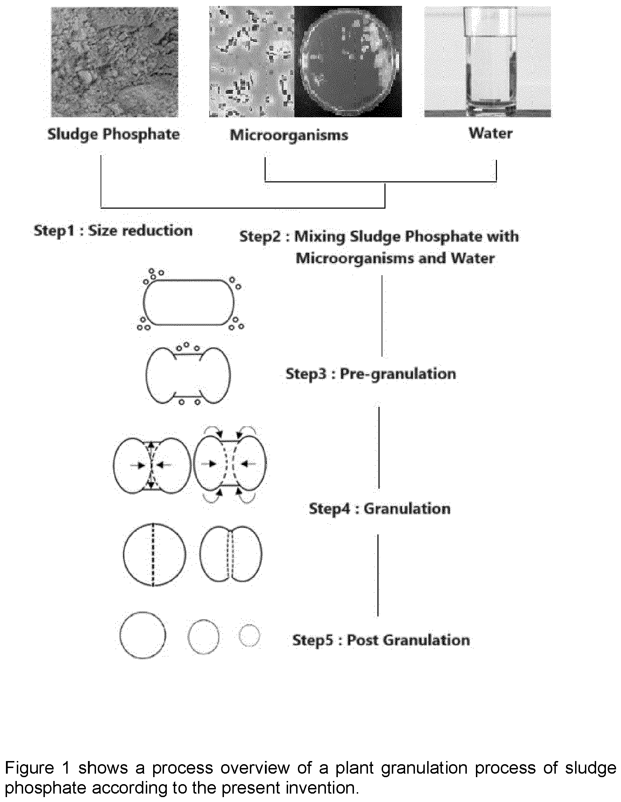

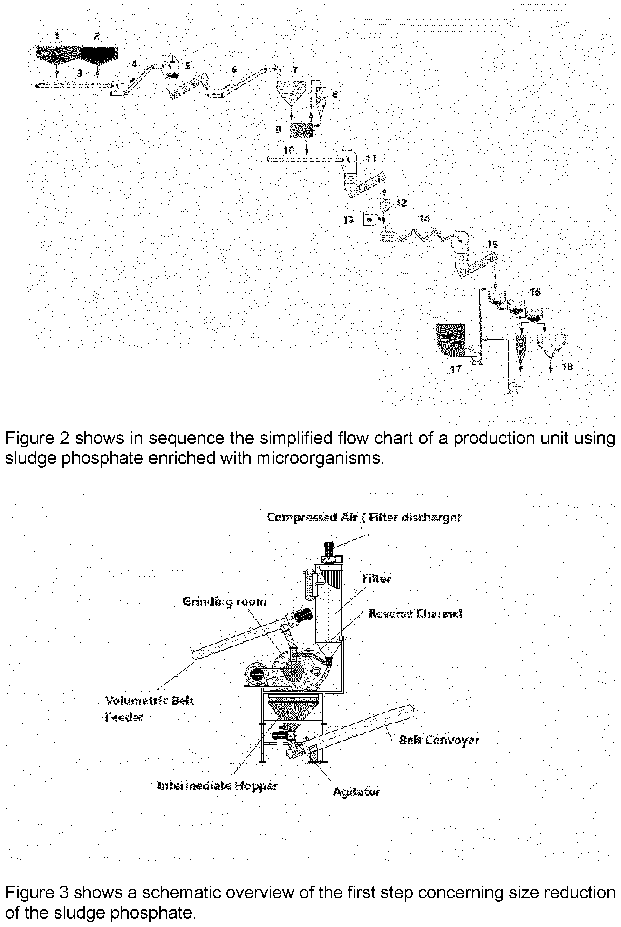

Figure 2 shows in sequence the simplified flow chart of a production unit using sludge phosphate enriched with microorganisms that applies the method described above to produce granule fertilizer. figure n°1 shows the silos MP(1), the silo MP(2), the convoyer1 (3), the volumetric belt feeder 1 (4), the continuous mixer (5) the volumetric belt feeder 2 (6), the silo feeder1 (7), the filter powder (8), the PFT level 1 crusher (9), the belt conveyer 2 (10), the volumetric belt feeder 3, (11), the silo hoper ( 12) , the misting skid system ( 13), the fbsm-016 granulator (14), the volumetric belt feeder 3 (15), the spin system (16), the heat system (17), the silo final product output (18). The arrangement of the machines as given on the diagrams is not binding and may differ in a real installation. Finally, the diagram be considered working drawings for the forms of the machines in question.
Figure 3 shows a schematic overview of the first step concerning size reduction of the sludge phosphate.
Figure 4, showing a schematic of the skid water, wherein microorganisms are mixed with water and prepared.
Figure 5 shows a schematic overview of the granulator used for third and fourth steps in instance pre-granulation, and granulation of sludge phosphate enriched with microorganisms according to present invention.
Figure 6 shows a schematic overview of the shearing and nebulizer mechanism inside the first drum.
Figure 7 shows a schematic overview of the spin dryer used for post granulation step of sludge phosphate enriched with microorganisms according to present invention.
Figure 8 shows a picture of the granule fertilizer resulting from processing sludge phosphate and microorganisms using the process described in this method.

### Detailed description of the invention

The present invention concerns a method for producing granules fertilizer using microorganisms and sludge phosphate. More particularly, the invention relates in five steps processing, size reduction, mixing of sludge phosphate with microorganisms, pre-granulation, granulation, and post granulation described in the flow diagram figure 1.

This invention considers the valorization of unclassified material left in a deposit basin composed of sludge phosphate that comprises an appropriate percentage of elements needed by the plant, in instance P2O5, that may vary from 12% up to 16%, Cao for a range of 30% up to 34%, MgO vary from 2 up 5% and a trace concentration of nitrogen mainly in form of Nitrate that vary between 500ppm up to 800ppm. More particularly, the present invention relates to the granulation of sludge phosphate combined by two microorganisms, for instance Azotobacter and phosphate solubilizing bacteria. Finally, the present invention also concerns a process of polishing and drying the granule fertilizer by using a combination of centrifugal forces and dry air ventilation.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

A "sludge phosphate" refers to a solid sludge produced from, water treatment of phosphate rock. In the spirit of the invention, the main target components of sludge phosphate are the fourth elements P2O5, Cao, MgO and N. Phosphate treatment sludge is characterized by a mineralogical composition consisting mainly of phosphate calcium as well as clays such as palygorskite and vermiculite (Ettoumi et al., 2020).

In the first aspect, the invention aims to remove the distinctive characteristics of the different particles that make up the sludge phosphate substance. We have adapted a grinding technique suitable for coarse materials to provide a homogenous output material with same characteristics, that help for further granulation. Grinding takes place between two plates operating in a vertical plane by injecting the sludge phosphate in opposite directions into the grinding mechanism ( Figure 3). The raw material enters a chute near the axis, passes into the grinding cavity at an adjustable speed of 4400 rpm and is discharged at the lower periphery of the grinder. All the particles produced analyzed by Malvern Instruments are in a narrow range of uniformly fine sizes classified between 18 microns -23 microns and a Span value of 1.2 which further confirms the uniformity of the output material.

In the second aspect, the invention focusses on a preparation of mixture of microorganism and the grinded sludge phosphate. For the purpose two types of microorganisms were selected, in instance Azotobacter and Phosphors solubizing bacteria (Bacillus Thuringiensis). Azotobacter is one of the free-living nitrogen fixers and does not need to be in symbiosis to fix nitrogen (N2). Azotobacter are free-living, nitrogen-fixing bacteria that are fed by the plant only when nitrogen is needed. Previous study (Marina Fomina and Iryna Skorochod, 2020) and (Ivan Kirilovich Kurdish, 2000) showed the positive Interaction of Azotobacter with clay minerals increased their cell viability. Therefore, sludge phosphate that contains high concentration of clay minerals were suitable to develop granular bacterial preparations with high viable cell counts and stable compositions during long-term storage. The aim of using Azotobacter was to be doping the sludge phosphate with nitrogen for the purpose of creating a granular fertilizer with more add value. From other side phosphate solubizing bacteria (Bacillus Thuringiensis) , was selected due to its capacity of increasing water soluble phosphate concentration (Xiyang Liu, Chengyu Chen, Jing Wang, Shuhua Zou, Xinxian Long 2021). Both microorganisms are mixed with water inside a skid water system and sprayed on the sludge phosphate. The grinded sludge phosphate substance collected from grinding system would be conveyed via an auger to feed the granulator.

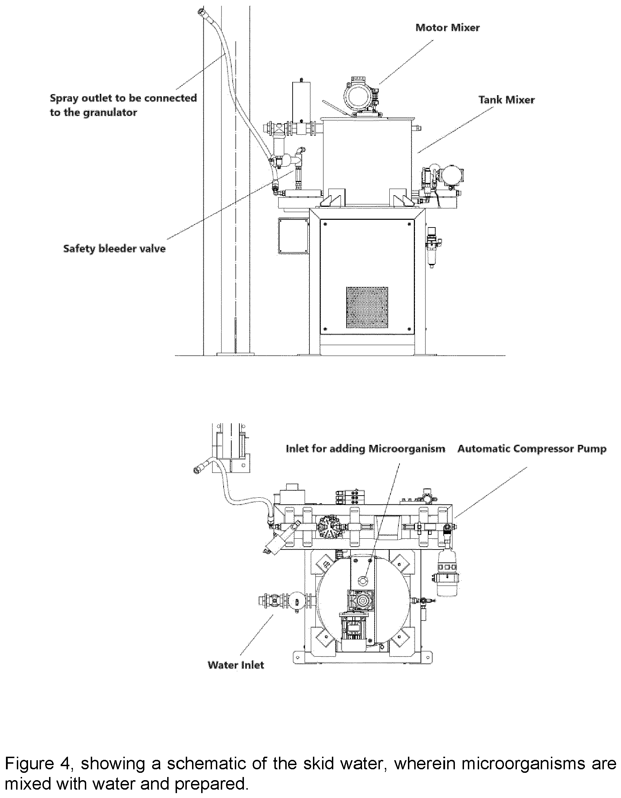

Figure 4 shows the skid water system, wherein both microorganisms (azotobacter and phosphate solubizing bacteria (Bacillus Thuringiensis)) are mixed with water. The skid's water tank where the mixture take part is supported with an automatic injunction pump that allow the broth (water + microorganisms) to drive through the spray outlet which is connected to the granulator.

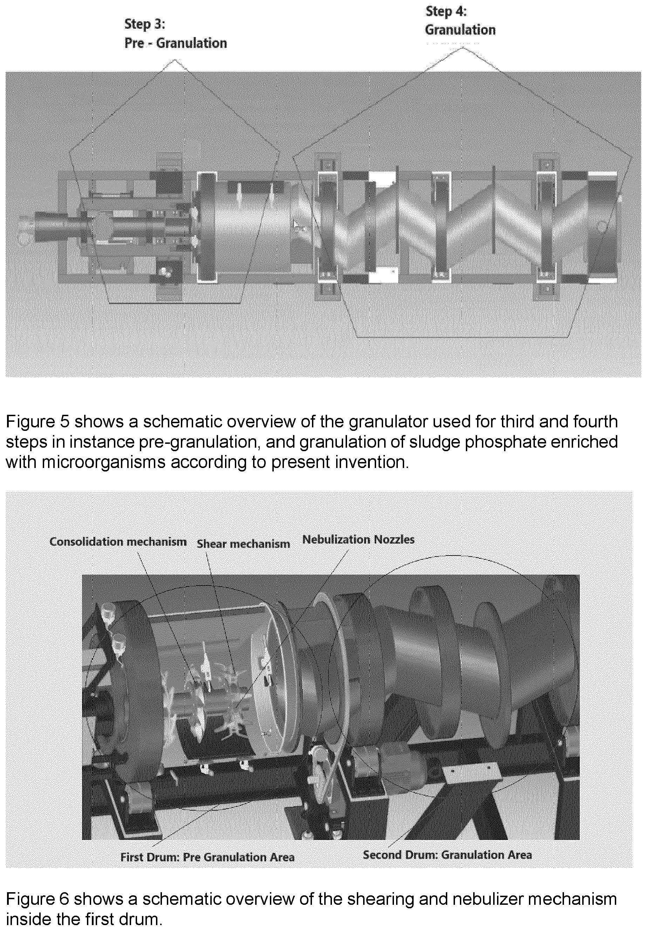

Figure 5, the invention describes the main granulator which is composed of two drums completely adjacent and communicating with each other. In each chamber a granulation function is applied to the mixture:
The operation of pre-granulation takes part in the first drum. This operation consists of applying intensive shear action to the mixture of sludge phosphate enriched with microorganism. Figure 6 shows that the first drum of the granulator is equipped with a rotating axe supported by two shearing knives and 6 nozzles. The axe is rotating at high speed of 3000 rpm, while the nozzles are connected to the output spray outlet.

Calculation software is used to calculate the mass of sludge phosphate in the volumetric belt feeder and provide instructions to the automatic water injection pump of skid water system to create a mass ratio of broth (water + microorganisms) to be nebulized on the sludge phosphate inside the first drum of the granulator.

The evolution of the particle size distribution of a particulate mass in a granulation process is controlled by several mechanisms, which begins with the nucleation of a sludge phosphate of fine powder wetted by the broth to form initial primary granules, the coalescence of existing granules and the superposition of raw material on previously formed granules can be simultaneously compacted by consolidation and reduced in size by breaking.

In the second drum, the granulation operation provides a strong interaction between the dominant mechanism of growth and consolidation, by using the principle of Huygens the controlled rotation speed regulated between 40-60 rpm effect as well as the density of the granules and their centrifugal force makes it possible to separate the granules of larger dimensions > 2mm with respect to those smaller < 2mm.

Figure 5 shows the special shape of the second drum, this zigzag shape permits an oscillating sliding movement in the form of a back and forth of the granules on the internal surface of the second drum. Makes it possible to join the remained powder in instance fine particles lower than 2mm to the granules and correct the deformations to make them more spherical/ellipsoid. The granules in this second drum enclosure have a dimension varying from 2 mm - 8 mm, given their largely ellipsoid shape, the particle size analysis that we used was intended to quantitatively determine the distribution of the particles according to an average between their diameters and their length.

The rotation speed of the first and second drum is controlled by a complete program consisting of a variable speed drive, a PLC, and a monitor. It is important to note that the granulator rotation speed was well chosen to meet the final granule particle size dimensions. Another speed of rotation will certainly result in a granule of different dimensions. The function that links the speed of rotation with the particle size is an inverse function, if the granulator rotates at a higher speed the granule ends up being smaller in size.

All granules that are produced and analyzed by the HAVER EML 200 model sieve are in a wide range of sizes uniformly classified with a concentration of particle size distribution between 2 mm - 8 mm. The granules have shapes that are either spherical or ellipsoid. The variations in size are between limits of 2mm - 8mm with relatively rounded surfaces with colors which vary between saddle brown and brown, brown depending on the degree of humidity and the initial color of the sludge phosphate. Furthermore, the humidity level remains relatively high, with a H2O concentration of 8%, which means we must dry the product to a humidity level < 5%, to consider it like a marketable product.

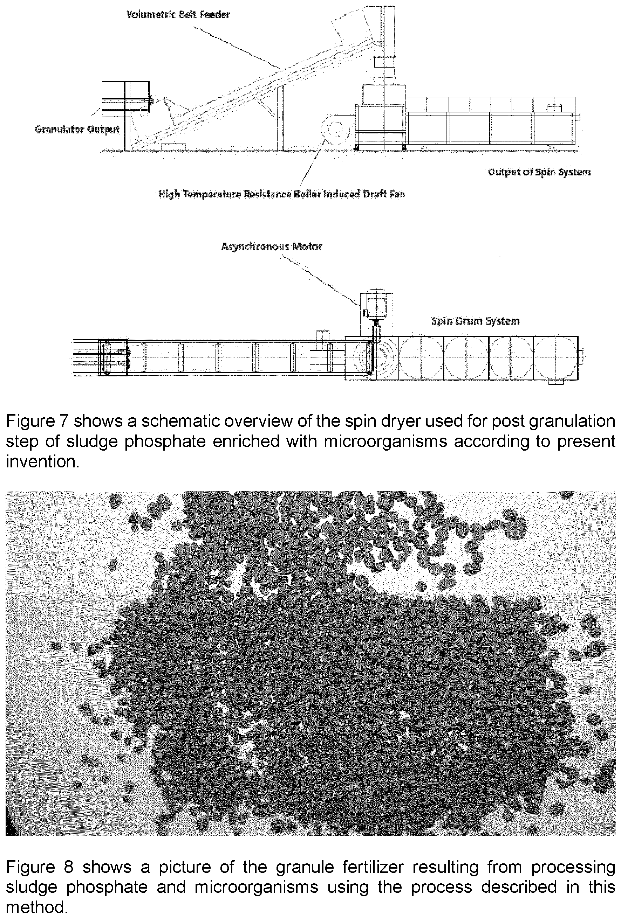

According to figure 7, the final step of the process will allow, thanks to an innovative technique, not only to dry the granule but also to converge the entire size towards a marketable dimension of 2mm - 5mm in accordance with granule fertilizer market specifications.

The wet granules discharged from the granulator will be directly poured into the silo feed system of the gravitational drying unit. The spin dryer consists of a centrifugal force drying system supported by a combined hot air and fan device. This low-cost and rigid structure system allows a very economical drying solution and leads to ideal results both in terms of reducing the H2O% content in the granule and in terms of the hardness level of the granule.

The supply of humidity is made in the granulator as described above, the humidity content has consequences on the ability to granulate, the hardness of granules, the functionality, and the quality of a final granulated product. It is therefore imperative to determine this parameter accurately to ensure a qualified granule fertilizer product.

At this final stage we measured the humidity level in the granules by the MCT Berthold instrument which determines the humidity value by detection of water molecules in the entire volume of the measured sample, independently of their physical or chemical bond with the product. The H2O content in the granule after drying by the centrifugal spin method is reduced to an average value of 4%.

The heat input is carried out at the Spin dryer level, it is important to have a heat source that can generate a minimum of 75°C of hot air in flow keep on going.

This calorific energy will make it possible to maintain the temperature of the spin system at a sufficient value to properly dry the granules. This temperature is of course related to the degree of humidity of the mixture of sludge phosphate and microorganisms. There are very close relationships between the heat input and the humidity of the mixture. That said, we suggest regular moisture intake of the mixture to ensure that the granulation parameters will always be maintained valid.

Thanks to the evaluation of the degree of hardness of the granules by the ASTM D4179 method using the resistance measuring device for tablets and pellets of the Mecmesin laboratory model, shows the average hardness of the granules after having undergone the post granulation operation is approximately 18 N. This value meets very well the requirements of granule fertilizer type's specifications which require that the degree of hardness should be greater than 15.07N. The full process worked in a very objective way to preserve all the physicochemical characteristics of the sludge phosphate and microorganisms and turn them to granule fertilizer. We have thus analyzed the outcome product to ensure that the nutrient percentages in instance, P2O5 and N are available in a proportional way. We have thus launched measurements using the international standard method for nitrogen and a spectrometric analysis for the rest of the elements.

Presented below are three values measured from three products resulting from this invention. Which, however, must be taken as merely indicative and not be considered as defining the precise limits of the present invention.

| Elements | Method | 1st analysis | 2nd analysis | 3rd analysis |
|---|---|---|---|---|
| P2O5 total | ISO 6598/1985 | 14.90% | 15.03% | 14.97% |
| Soluble P2O5 | ISO 5316 | 1.85% | 1.79% | 1.78% |
| N total | AOAC 978.02 | 1.41% | 1.38% | 1.52% |
| CaO | ASTM C25 | 30,21% | 30,74% | 32,12% |
| MgO | ASTM C25 | 2,49% | 2,22% | 2,37% |

### Conclusion

This invention describes the process of transformation and valorization of sludge phosphate using microorganisms to create an environmentally friendly granule fertilizer.

As can be seen, the results obtained using the invention fully meet granular fertilizer requirements. In fact, with no add of any chemical substance that can harm environment, it is clearly apparent (Figure 8) that physical and visible properties of the produced granule fertilizer out of the combination of sludge phosphate and microorganisms, using the innovative granulation process described above has an optimum shape, color, and plant nutritive characteristics.

In addition, observation and analysis of the various granules produced shows that the effect of microorganisms added to sludge phosphate increase the solubility of the phosphor as well as the concentration of total nitrogen, of the final granular fertilizer. Nevertheless, there is a limitation to this increase linked to the concentration of microorganisms and other biological parameters of the sludge phosphate.

At the same time, it is experimentally apparent that the full transformation process uses only very friendly environment mechanisms in instance mechanical forces and a cost-effective dryer solution adapted to this invention, yield to a granule with more homogeneous size and improved hardness.

### Claims

1. Method for producing environmentally friendly granule fertilizer combining sludge phosphate and microorganisms.
2. Method for producing granule fertilizer using a set of equipment's composed of grinding machine, a misting skid system, a granulator and spin-drying system.
3. Method according to claim 1, wherein the sludge phosphate is grinded by particle collision inside a cavity at an adjustable speed of 4400 rpm and is discharged at the lower periphery.
4. Method according to claim 3, where all sludge phosphate particles produced are in a narrow range of uniformly fine sizes classified between 18 microns - 23 microns and a Span value of 1.
5. Method according to claim 1, wherein the microorganism composed of Azotobacter and Phosphor solubilizing bacteria (Bacillus Thuringiensis) are both mixed for a given ratio with water inside a misting skid system.
6. Method according to claim 2, 3 and 4, wherein the mixture of water with microorganism are nebulized on the grinded sludge phosphate inside the first rotary drum.
7. Method according to any one of claim of 2, 4 and 5, wherein the mixed product composed of sludge phosphate and microorganisms is pre-granulated inside a first drum by consolidation and reduced in size by breaking.
8. Method according to any one of claims 2 and 6, wherein the controlled rotation speed of the second drum is regulated between 40-60 rpm.
9. Method according to claim 7, wherein the density of the granules and their centrifugal force makes it possible to separate the granules of larger dimensions > 2mm with respect to those smaller < 2mm.
10. Method according to claim 8, Wherein, the oscillating sliding movement in the form of a back and forth of the granules on the internal surface of the second drum make it possible to have a dimension varying from 2mm-8mm.
11. Method according to claim 2, Wherein, the spin dryer consists of a centrifugal force drying system supported by a combined hot air and fan device.
12. Product according to claim 8 and 9, wherein the H2O% content in the granules were measured by the MCT Berthold instrument that shows a reduction from 8% to 4% after drying by the spin dryer system.
13. Method according to claim 10, wherein heat input is carried out at the Spin dryer with a heat source generating 75°C of hot air in flow.
14. Product according to any of claims 10, 11 and 12, wherein the hardness of granules received from the spin dryer shows an average value of 18N using the ASTM D4110 method for resistance measurement of tablets and pellets.
15. Product according to claim 2 to 13, wherein the P2O5, CaO, MgO and Total N were measured for the outcome granules resulting of the full process of granulation.

## Claims

1. Method for producing environmentally friendly granule fertilizer combining sludge phosphate and microorganisms.

2. Method for producing granule fertilizer using a set of equipment's composed of grinding machine, a misting skid system, a granulator and spin-drying system.

3. Method according to claim 1, wherein the sludge phosphate is grinded by particle collision inside a cavity at an adjustable speed of 4400 rpm and is discharged at the lower periphery.

4. Method according to claim 3, where all sludge phosphate particles produced are in a narrow range of uniformly fine sizes classified between 18 microns - 23 microns and a Span value of 1.

5. Method according to claim 1, wherein the microorganism composed of Azotobacter and Phosphor solubilizing bacteria (Bacillus Thuringiensis) are both mixed for a given ratio with water inside a misting skid system.

6. Method according to claim 2, 3 and 4, wherein the mixture of water with microorganism are nebulized on the grinded sludge phosphate inside the first rotary drum.

7. Method according to any one of claim of 2, 4 and 5, wherein the mixed product composed of sludge phosphate and microorganisms is pre-granulated inside a first drum by consolidation and reduced in size by breaking.

8. Method according to any one of claims 2 and 6, wherein the controlled rotation speed of the second drum is regulated between 40-60 rpm.

9. Method according to claim 7, wherein the density of the granules and their centrifugal force makes it possible to separate the granules of larger dimensions > 2mm with respect to those smaller < 2mm.

10. Method according to claim 8, Wherein, the oscillating sliding movement in the form of a back and forth of the granules on the internal surface of the second drum make it possible to have a dimension varying from 2mm-8mm.

11. Method according to claim 2, Wherein, the spin dryer consists of a centrifugal force drying system supported by a combined hot air and fan device.

12. Product according to claim 8 and 9, wherein the H2O% content in the granules were measured by the MCT Berthold instrument that shows a reduction from 8% to 4% after drying by the spin dryer system.

13. Method according to claim 10, wherein heat input is carried out at the Spin dryer with a heat source generating 75°C of hot air in flow.

14. Product according to any of claims 10, 11 and 12, wherein the hardness of granules received from the spin dryer shows an average value of 18N using the ASTM D4110 method for resistance measurement of tablets and pellets.

15. Product according to claim 2 to 13, wherein the P2O5, CaO, MgO and Total N were measured for the outcome granules resulting of the full process of granulation.
